(19) Europäisches Patentamt
European Patent Office
Office européen des brevets

(11) **EP 1 832 809 B1**

(12) **EUROPEAN PATENT SPECIFICATION**

(45) Date of publication and mention
of the grant of the patent:
**22.06.2011 Bulletin 2011/25**

(51) Int Cl.:
*F23G 5/50* *(2006.01)*  *F23N 1/00* *(2006.01)*
*F23N 5/00* *(2006.01)*  *G05B 13/02* *(2006.01)*

(21) Application number: **06405101.4**

(22) Date of filing: **09.03.2006**

(54) **Controlling a waste combustion process**

Regelung eines Abfallverbrennungsprozesses

Contrôle d'un procédé de combustion des déchets

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**12.09.2007 Bulletin 2007/37**

(73) Proprietor: **ABB Technology AG**
**8050 Zürich (CH)**

(72) Inventors:
• **Bardi, Silvia**
**5400 Baden (CH)**

• **Weisenstein, Wolfgang**
**5507 Mellingen (CH)**

(74) Representative: **ABB Patent Attorneys**
**C/o ABB Schweiz AG**
**Intellectual Property (CH-LC/IP)**
**Brown Boveri Strasse 6**
**5400 Baden (CH)**

(56) References cited:
**EP-A- 1 382 905    EP-A- 1 406 136**
**EP-A- 1 589 283    US-A- 4 528 918**

**Description**

FIELD OF THE INVENTION

The invention relates to the field of waste incineration and in particular to a method of controlling a waste combustion process.

BACKGROUND OF THE INVENTION

Waste is any type of residual material that remains after any human activity, such as production and consumption of goods or the construction of buildings and traffic ways. The majority of the residual materials are, except for their pure mass and volume, not a potential threat to the environment, nevertheless their correct treatment can help to minimize or avoid associated long-term risks. A sophisticated municipal waste management also helps to reduce the costs of waste treatment and to avoid the destruction of large areas which otherwise would be needed for waste dumping. Hence, the thermal treatment of waste, i.e. the waste incineration or combustion, is an indispensable part of any municipal waste management concept. Incineration is understood as the deliberately initiated, controlled and, in the wider sense, observed, self-sustaining oxidation of any substance. Like in any combustion of solid fuels, flue gases and ashes are the products of such waste incineration processes. Ashes are residual matters of different compositions that contain mainly silicon oxide and other minerals. Due to their chemical inertia they are often used for landfills and for civil engineering.

Municipal and industrial waste is treated in waste incineration plants in order to reduce the volume of the waste to be deposited and in order to transform environmentally hazardous components of the waste, such as aromatic hydrocarbons or organic solvents, into harmless compounds. The increasing amount of waste to be treated leads to the design of incineration plants with multiple tracks, which are able to incinerate several ten tons of waste per hour. So-called waste-to-energy plants do not just burn the waste to ashes, they also use the combustion energy to generate steam, e.g. for district heating, and/or electricity and thus improve the overall efficiency of the plant.

The sophisticated installations for flue gas and ash treatment as well as energy conversion increase the complexity of the plants and call for a suitable control technique. However, there are no adequate overall control schemes available so far to supplant an experienced operator, owing basically to the complex chemical processes and the unsteady fuel qualities resulting in fluctuations in combustion temperature and flue gas composition and flow. The variability of the waste composition relates to, in particular, the heating value or the moisture content of the waste, or the amount of sand, gravel or other non-combustible materials, such as metals, in the waste.

The most significant control parameters which can be used to influence the combustion process in waste incineration plants are the mass flows of primary and secondary combustion air, the air temperature, the amount of returned flue gas, the amount of waste or fuel fed and the transportation speed or the stoking speed of a reciprocating grate. These parameters have to be optimized according to expected and unexpected variations in water content and heating value of the waste, with the objective to maximize the amount of waste that can be treated or the amount of steam that can be generated, and/or to minimize the amount of air pollutant emissions.

EP 1589283 discloses a method of controlling a waste incineration plant by generating control signals in response to measured target parameters of the waste combustion process. The generation of the control signals is based on a model of the waste combustion process involving model inputs corresponding to the control signals, model states and model outputs corresponding to the target parameters, state equations linking the model states to the model inputs, and output equations linking the model outputs to the model inputs and model states. The model of the waste combustion process comprises a pile representing a sector of a waste bed on the grate, the pile having a restricted spatial resolution limited to a lower layer and an upper layer, wherein a homogeneously distributed mass and a spatially constant temperature of the lower and the upper layer each form a model state.

A key value for the combustion process and its control is the water content in the fresh waste when it enters the incineration furnace. Actually there is no technology available to measure the water content of the fresh waste before it enters the furnace. Since the water content is most important for the control of the combustion process calculation methods have been developed to derive it from the water content in the flue gases by evaluating expressions of the following kind:

$$\dot{m}_{H_2O\_waste} = \dot{m}_{H_2O\_flue} - \dot{m}_{H_2O\_formation} - \dot{m}_{H_2O\_combustion}$$

where the indices H$_2$0_waste, _flue, _formation and _combustion refer to the waste, the flue gas, the formation water (i.e. the water that is formed during combustion), and the humidity in the combustion air, respectively. Nevertheless, the accuracy of these calculations is more qualitative than quantitative and suffers from a time delay of several minutes.

This makes it difficult to assess and use this information for the control of the combustion process.

In the European Patent Application EP-A 1406136, a value of a vector of variables $\underline{p}$ in a mathematical model for a physical process is estimated. The variables $\underline{p}$ represent process properties or parameters such as a mass flow rate or efficiency of a turbo machine, which properties are a function of a state vector $\underline{x}$ of the mathematical model. The vector of variables $\underline{p}$ is incorporated into the state vector $\underline{x}$ as an augmented state, and the complete state (comprising the state vector $\underline{x}$ and the augmented state $\underline{p}$) is conventionally estimated by a State Augmented Extended Kalman Filter (SAEKF) algorithm, based on previously measured values of input variables $\underline{u}$. In other words, the process properties themselves are estimated at the same time as the states, contrary to a more classical estimation of a set of polynomial coefficients for computing said process properties from the state.

## DESCRIPTION OF THE INVENTION

It is an objective of the invention to enable an automated, real-time control of a waste incineration plant treating waste of variable moisture content. This objective is achieved by a method of and a system for controlling a waste combustion process according to claims 1 and 7, respectively. Further preferred embodiments are evident from the dependent patent claims.

According to the invention, time varying process parameters of the waste combustion process, such as a water content of the incoming waste, are estimated via a parameter estimation algorithm for time varying parameters based on Kalman Filters. The estimated process parameters are then used to determine, in a controller for real-time control of the waste incineration plant, control parameters, such as a waste feed rate, corresponding to input variables of a model of the waste combustion process.

In an advantageous variant of the invention, the time varying process parameters form a vector of variables in a mathematical model for the waste incineration process, and are incorporated into a state vector of the model as an augmented state. The complete state comprising the state vector and the augmented state is then estimated by a State Augmented Extended Kalman Filter (SAEKF) algorithm.

Preferably, the Kalman Filter involves a state-space model of the waste combustion process with a restricted spatial resolution. In particular, a spatial resolution of a pile representing a sector of a waste bed on the grate is limited to a lower layer and an upper layer. Such a model with limited complexity as compared to a time consuming computational fluid dynamics further contributes to a real-time implementation of the method of controlling a waste combustion process according to the invention.

Preferably, the individual steps or functional modules of the method according to the invention are implemented as programmed software modules or procedures. The computer program code of the software modules is stored in a computer program product for controlling one or more processors of a waste incineration control system, particularly, in a computer program product including a computer readable medium containing therein the computer program code means.

## BRIEF DESCRIPTION OF THE DRAWINGS

The subject matter of the invention will be explained in more detail in the following text with reference to preferred exemplary embodiments which are illustrated in the attached drawings, in which:

Fig.1 schematically shows a waste incineration plant,
Fig.2 depicts a diagram of feed forward controller.

The reference symbols used in the drawings, and their meanings, are listed in summary form in the list of reference symbols. In principle, identical parts are provided with the same reference symbols in the figures.

## DETAILED DESCRIPTION OF PREFERRED EMBODIMENTS

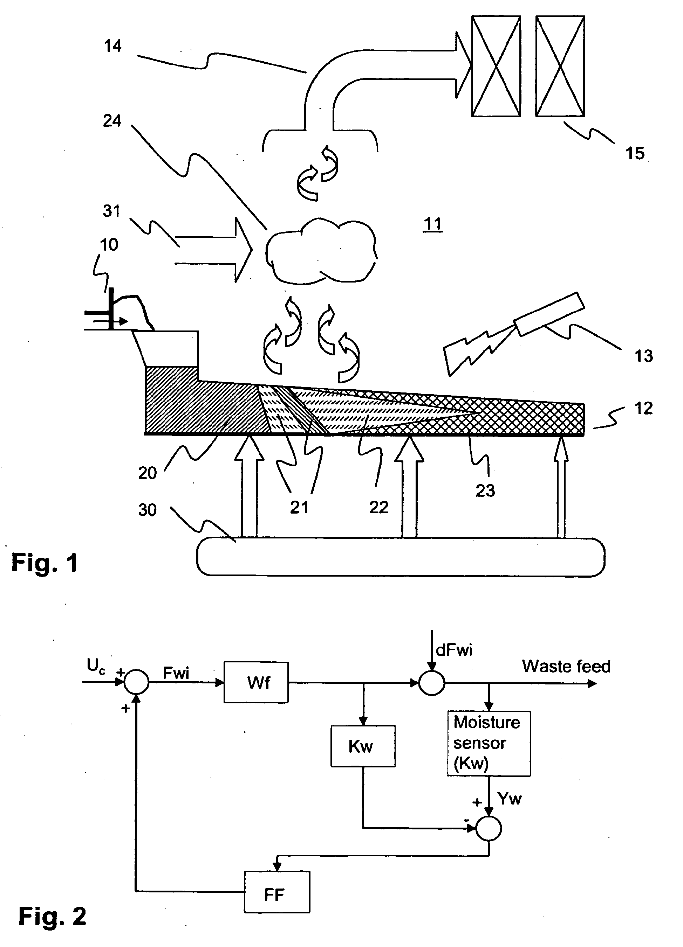

Fig.1 schematically shows a waste incineration plant with a number of basic components. An input feed mechanism or actuator 10 introduces the municipal or industrial waste, garbage or other debris into a chute at the entrance of a furnace 11 and places the former on a supported movable grate 12 at a particular waste feed rate $w_0$, thereby forming a waste bed. The grate 12 generally comprises some oppositely moving grate plates to spread and mix the waste and forward it along the grate 12. Auxiliary burners 13 may be provided in order to start or support the combustion processes. The combusted flue gases are collected in a flue gas tract or flue gas channel 14 upstream of the furnace 11 and guided to a boiler or steam generator 15.

Without loss of generality, the incineration process is divided into four zones to be serially traversed by the waste: Drying zone 20, first combustion zone for pyrolysis and gasification/volatilization 21, residual zone for char oxidation or solid combustion 22, and ash treatment/sintering zone 23. These zones are actually not very well separated in the furnace and can overlap to a certain extent. A second combustion zone or flame zone 24, where the homogeneous gas phase combustion of the pyrolysis gases takes place, is identified above the waste bed. Primary air 30 is fed from below the grate in generally different amounts to the four abovementioned zones 20, 21, 22, 23. Secondary air 31 is fed above the grate to ensure complete combustion of the gasification and pyrolysis products in the second combustion zone 24.

The estimation of the process parameters involves three main modules which are independent of each other and can be maintained and developed separately.

a) The parameter estimation module, which consist of the State-Augmented Extended Kalman Filter, the Unscented Kalman Filter and the Adaptive Extended Kalman Filter;
b) The model library, which consists of a heat exchanger, a grate combustion model plus various building blocks (storage and flow elements);
c) The solver library, which consists of widely used solvers.

From an engineering perspective, only the parameter estimation module is called from the product code. The product code can be written in any language, which allows calling functions in a DLL (Visual Basic, Visual C/C++, MATLAB, etc.) The development engineer must supply the estimation module with input and output measurements on files and receives back the parameter estimates and trust indicators also on files.

The main concept behind the parameter estimation module is the Kalman filter in various forms. The original Kalman filter for linear systems has become a mature technology for so-called "white-box" state estimation, meaning that all parameters are known and only the state variables need to be estimated. If, however, the resulting model contains unknown parameters, it is called a gray-box model. The name Extended Kalman Filter (EKF) is used when the filter is applied to nonlinear systems. In this case, the filter is only an approximation and the system equations are linearized at every time step when computing the filter gain matrix.

The well-known Kalman Filter estimates a system state of a dynamic system that is representable by state-space representation $\dot{x} = f(x,u)$ with state vector x and input vector $u$. In the State Augmented Extended Kalman Filter (SAEKF), the state is augmented by variables p to be estimated, and the state-space model underlying the SAEKF is

$$\begin{bmatrix} \dot{x} \\ \dot{p} \end{bmatrix} = \begin{bmatrix} f(x,u,p) \\ 0 \end{bmatrix} + w,$$

where $\dot{x} = f(x, u, p)$ represents the modelled dynamics of a known dependency of the change $\dot{x}$ in system state from the state vector x, the measured values $u$ and the vector of variables p, and w represents a vector of noise disturbances. The combined vector [x, p] is called *complete state*. The variables p to be estimated correspond to coefficients of a polynomial approximations. The computation of the estimate of the complete state along with associated covariance matrices is done according to a suitable implementation of the known SAEKF approach, as shown e.g. in Robert Stengel, "Optimal control and estimation ", Dover Publications, 1994.; (p386-400).

The name Augmented Kalman Filter comes from the augmentation of the (linear or nonlinear) system states $\dot{x} = f(x, u)$ with dynamics $\dot{p}$ for the unknown parameters p. For example, for constant parameters with some possible unknown external influence, the dynamics of p is often set to a "random walk" $\dot{p} = w$, where w is a stochastic noise process. What makes the augmented filter work, is the connection of the parameter estimates $p$ and the system states x through the covariances of the noise processes. The unscented Kalman filter was developed by and differs from the standard Kalman Filter in the way the covariance matrices are computed. The matrices are computed numerically by propagating three different so-called 'sigma points' through the model and estimating the covariances from the three resulting output vectors. The advantage of doing this, is a significant simplification of the simulations required (the Riccati equations disappear.) The Adaptive Kalman Filter is a further extension, which overcomes the difficulty in tuning the EKF and the UKF by adapting the tuning matrices Q and R (noise covariances).

Gray-box identification has some advantages over black-box identification methods, such as ARMAX models or Neural Networks. Black-box models usually do not utilize prior knowledge of the system and often a large set of parameters needs to be estimated. In gray-box identification, only the unknown parameters are estimated. Furthermore, if only one physical parameter changes due to a modification of the system, only that specific parameter has to be re-estimated, whereas in a black-box model, the whole set of parameters would have to be re-determined.

If the moisture content of the waste in the chute is assessed through the parameter estimation procedure above, it is possible to introduce a feed forward controller element that should be able to some extent compensate for variations in the waste composition.

The basic feed forward control configuration is shown in Fig.2. The idea is as follows. The controller is designed assuming a nominal waste composition. Accordingly, the controller thus generates a waste mass flow signal ($U$) on the assumption that a constant percentage ($W_f$) of the waste is moisture. However, because of random variations ($dF_{wi}$) of the waste composition, the actual moisture content ($Y_w$) is different from the assumed one. The feed forward controller ($FF$) uses the difference between expected moisture content and actual moisture content ($Y_w$) to adjust U to give the actual waste mass flow ($F_{wi}$). Note that in Fig.2 $dF_{wi}$ and the output of $W_f$ are vector signals with elements that represent the various components of the waste.

Referring to Fig.2, a design of the feed forward controller is done as follows.

$$Y_w = K_w \cdot dF_{wi} + K_w \cdot W_f \cdot F_{wi}$$

but

$$F_{wi} = U + FF \cdot Y_w - FF \cdot K_w \cdot W_f \cdot F_{wi}$$

$$\therefore F_{wi} = \frac{U + FF \cdot Y_w}{1 + FF \cdot K_w \cdot W_f}$$

substituting the value for $F_{wi}$ into the $Y_w$ equation and rearranging gives

$$Y_w = K_w \cdot W_f \cdot U + \left(1 + FF \cdot K_w \cdot W_f\right) \cdot K_w \cdot dF_{wi}$$

Hence, if $(1 + FF \cdot K_w \cdot W_f) \ll 1$ the effect of $dF_{wi}$ on $Y_w$ will be minimal. In the following choose a dynamic FF such that near DC the gain of $(1 + FF \cdot K_w \cdot W_f)$ is zero or very small, in other words let

$$\left(1 + FF \cdot K_w \cdot W_f\right) = \frac{s}{s + K}$$

Where s is the Laplace operator and $K$ a suitable constant. Rearranging gives

$$FF = \frac{-K}{s + K} \cdot \frac{1}{K_w \cdot W_f}$$

Note that for this application $dF_{wi}$ is expected to have a bandwidth of less than 1 Hz, implying that a $K$ value of $2*\Pi*10$ will give a rejection of better than $1/11$ for frequencies less than 1 Hz. In practice although a bigger value of $K$ would improve the disturbance rejection a value that is too large will cause implementation difficulties (because of the required sampling interval) and may adversely interfere with the feedback control. For this application the indicated value is acceptable.

LIST OF DESIGNATIONS

10      actuator

| 11 | furnace |
|---|---|
| 12 | grate |
| 13 | auxiliary burner |
| 14 | flue gas tract |
| 15 | boiler |
| 20 | drying zone |
| 21 | first combustion zone |
| 22 | residual zone |
| 23 | ash treatment zone |
| 24 | second combustion zone |
| 30 | primary air |
| 31 | secondary air |

**Claims**

1. A method of controlling a waste combustion process, comprising

   - estimating a value of a time varying process parameter ($p$) of the waste combustion process by means of a Kalman Filter,
   - determining a control value of a control parameter ($w_0$) based on the value of said process parameter ($p$), and
   - applying said control value to an actuator (10) of the waste combustion process.

2. The method according to claim 1, **characterized in that** the process parameter ($p$) is a water content of the waste, and **in that** the control parameter is a waste feed rate ($w_0$) of a waste incineration plant.

3. The method according to claim 1, **characterized in that** the value of the process parameter ($p$) is estimated as an augmented state in a State Augmented Extended Kalman, Filter (SAEKF) algorithm.

4. The method according to claim 1, **characterized in that** the Kalman Filter is based on a model of a waste combustion process with a restricted spatial resolution.

5. The method according to claim 1, **characterized in that** the control value of the control parameter ($w_0$) is determined by means of a Feed Forward controller.

6. A computer program for executing the method according to one of claims 1 to 5.

7. A system for controlling a waste combustion process, comprising

   - means for estimating a value of a time varying process parameter ($p$) of the waste combustion process by means of a Kalman Filter,
   - means for determining a control value of a control parameter ($w_0$) based on the value of said process parameter ($p$), and
   - an actuator (10) of the waste combustion process to which said control value is applied.

**Patentansprüche**

1. Verfahren zum Steuern eines Abfallverbrennungsprozesses, das umfasst:

   - Schätzen eines Wertes eines zeitlich veränderliche Prozessparameters ($p$) des Abfallverbrennungsprozesses mittels eines Kalman-Filters,
   - Bestimmen eines Steuerwertes eines Steuerparameters ($w_0$) anhand des Wertes des Prozessparameters ($p$) und
   - Eingeben des Steuerwertes in einen Aktor (10) des Abfallverbrennungsprozesses.

2. Verfahren nach Anspruch 1, **dadurch gekennzeichnet, dass** der Prozessparameter ($p$) ein Wassergehalt des Abfalls ist und dass der Steuerparameter eine Abfallzufuhrrate ($w_0$) der Abfallveraschungsanlage ist.

**3.** Verfahren nach Anspruch 1, **dadurch gekennzeichnet, dass** der Wert des Prozessparameters ($p$) als ein erhöhter Zustand in einem erweiterten Kalman-Filter-Algorithmus mit erhöhtem Zustand (SAEKF-Algorithmus) geschätzt wird.

**4.** Verfahren nach Anspruch 1, **dadurch gekennzeichnet, dass** das Kalman-Filter auf einem Modell eines Abfallverbrennungsprozesses mit begrenzter räumlicher Auflösung beruht.

**5.** Verfahren nach Anspruch 1, **dadurch gekennzeichnet, dass** der Steuerwert des Steuerparameters ($w_0$) mittels einer Vorwärtsregelungs-Steuereinheit bestimmt wird.

**6.** Computerprogramm zum Ausführen des Verfahrens nach einem der Schritte 1 bis 5.

**7.** System zum Steuern des Abfallverbrennungsprozesses, das umfasst:

- Mittel, um einen Wert des zeitlich veränderlichen Prozessparameters ($p$) des Abfallverbrennungsprozesses mittels eines Kalman-Filters zu schätzen,
- Mittel, um einen Steuerwert des Steuerparameters ($w_0$) anhand des Wertes des Prozessparameters ($p$) zu bestimmen, und
- einen Aktor (10) des Abfallverbrennungsprozesses, in den der Steuerwert eingegeben wird.

**Revendications**

**1.** Procédé de contrôle d'un processus de combustion de déchets comprenant les actions qui consistent à :

- au moyen d'un filtre de Kalman, estimer une valeur variable dans le temps d'un paramètre ($p$) du processus de combustion de déchets,
- déterminer une valeur de contrôle d'un paramètre ($w_0$) de contrôle sur base de la valeur dudit paramètre ($p$) du processus et
- appliquer ladite valeur de contrôle sur un actionneur (10) du processus de combustion de déchets.

**2.** Procédé selon la revendication 1, **caractérisé en ce que** le paramètre ($p$) du processus est une teneur en eau des déchets et **en ce que** le paramètre de contrôle est un débit ($w_0$) de déchets de l'installation d'incinération de déchets.

**3.** Procédé selon la revendication 1, **caractérisé en ce que** la valeur du paramètre ($p$) du processus est estimée en tant qu'état augmenté d'un algorithme de filtre de Kalman étendu en état augmenté ("State Augmented Extended Kalman Filter" - SAEKF).

**4.** Procédé selon la revendication 1, **caractérisé en ce que** le filtre de Kalman est basé sur un modèle de processus de combustion de déchets à une résolution spatiale restreinte.

**5.** Procédé selon la revendication 1, **caractérisé en ce que** la valeur de contrôle du paramètre ($w_0$) de contrôle est déterminée au moyen d'un contrôleur à précompensation.

**6.** Programme informatique qui exécute le procédé selon l'une quelconque des revendications 1 à 5.

**7.** Dispositif de contrôle d'un processus de combustion de déchets, comprenant :

- des moyens qui estiment une valeur variable dans le temps d'un paramètre ($p$) du processus de combustion de déchets au moyen d'un filtre de Kalman,
- des moyens qui déterminent une valeur de contrôle d'un paramètre ($w_0$) de contrôle sur base de la valeur dudit paramètre ($p$) du processus et
- un actionneur (10) du processus de combustion de déchets sur lequel ladite valeur de contrôle est appliquée.

**Fig. 1**

**Fig. 2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1589283 A

- EP 1406136 A

**Non-patent literature cited in the description**

- **ROBERT STENGEL.** Optimal control and estimation. Dover Publications, 1994, 386-400